# EUROPÄISCHE PATENTSCHRIFT

(11) **EP 3 001 226 B1**
(45) Veröffentlichungstag und Bekanntmachung des Hinweises auf die Patenterteilung: **10.07.2024**
(21) Anmeldenummer: 14186523.8
(22) Anmeldetag: 26.09.2014
(51) Int. Cl.: G01V 8/20, G06V 10/141

(54) **Lichtvorhang**
Light curtain
Rideau lumineux

(43) Veröffentlichungstag der Anmeldung: 30.03.2016
(73) Patentinhaber: Leuze electronic GmbH + Co KG, 73277 Owen/Teck (DE)
(72) Erfinder: Eberle, Andreas, 73252 Lenningen (DE); Kölle, Thomas, 73312 Geislingen-Türkheim (DE); Schneider, Manfred, 89150 Laichingen (DE)
(74) Vertreter: Ruckh, Rainer Gerhard

(56) Entgegenhaltungen:
- EP-A1- 1 437 542
- EP-A2- 1 921 469
- WO-A1-2013/144509
- DE-A1- 102009 036 389
- DE-A1- 102012 021 972
- DE-A1- 19 509 631
- DE-U1- 202008 012 280
- US-A- 6 124 586

## Beschreibung

Die Erfindung betrifft einen Lichtvorhang gemäß dem Oberbegriff des Anspruchs 1.

Bekannte, derartige Lichtvorhänge arbeiten generell nach dem Lichtschrankenprinzip. Gemäß einer ersten Variante weist ein solcher Lichtvorhang eine Senderleiste mit Sendern und eine Empfängerleiste mit Empfängern auf, die an gegenüberliegenden Rändern eines Überwachungsbereichs, in welchem Objekte erkannt werden sollen, angeordnet sind. Jeweils einem Sender der Senderleiste ist ein Empfänger der Empfängerleiste so zugeordnet, so dass bei freiem Überwachungsbereich die vom Sender emittierten Lichtstrahlen ungehindert auf den Empfänger treffen. Der Sender und der zugeordnete Empfänger bilden so eine Strahlachse des Lichtvorhangs. Mit den so ausgebildeten Strahlachsen des Lichtvorhangs wird ein flächiger Überwachungsbereich überwacht. Eine Objektdetektion erfolgt durch die Unterbrechung wenigstens einer der Strahlachsen des Lichtvorhangs. Der so ausbildete Lichtvorhang arbeitet nach dem Einweg- Lichtschrankenprinzip.

Weiterhin sind auch Lichtvorhänge bekannt, die nach dem Reflexionslichtschrankenprinzip arbeiten. In diesem Fall sind die Sender und Empfänger in einer gemeinsamen Leiste untergebracht, die an einem Rand des Überwachungsbereichs angeordnet ist. Am gegenüberliegenden Rand des Überwachungsbereichs befindet sich ein Reflektor, insbesondere ein Retroreflektor. Bei freiem Überwachungsbereich werden die von einem Sender emittierten Lichtstrahlen ungehindert zum Reflektor und von dort zu einem dem Sender zugeordneten Empfänger geführt. Auch in diesem Fall erfolgt bei einem Objekteingriff die Unterbrechung wenigstens einer der Strahlachsen.

Bei beiden Typen von Lichtvorhängen erfolgt somit eine Objektdetektion derart, dass geprüft wird, ob durch einen Objekteingriff wenigstens eine der Strahlachsen des Lichtvorhangs unterbrochen wird.

Derartige Lichtvorhänge ermöglichen zwar eine sichere Objektdetektion. Jedoch ist eine wesentliche Voraussetzung für den Einsatz eines solchen Lichtvorhangs, dass beidseits des Überwachungsbereichs Elemente des Lichtvorhangs platziert werden, um dann durch eine Strahlunterbrechung von Lichtstrahlen eine Objektdetektion vornehmen zu können.

Diese Bedingung ist jedoch für eine Vielzahl von Applikationen nicht erfüllbar. Ein Beispiel hierfür ist die Erkennung von Objekten auf einer Förderstrecke oder die Prüfung, ob ein Kasten, insbesondere Getränkekasten, vollständig mit Behältern, insbesondere Flaschen oder Dosen, befüllt ist.

Für derartige Applikationen werden bislang optische Scanner, insbesondere scannende Distanzsensoren, eingesetzt. Dort besteht jedoch ein wesentlicher Nachteil darin, dass die Detektionssicherheit zu den Rändern des Überwachungsbereichs hin abnimmt, so dass dort gegebenenfalls keine hinreichend sichere Objektdetektion mehr gewährleistet ist.

Die DE 20 2008 012 280 U1 betrifft eine Vorrichtung zur Objekterkennung auf einem Förderband, umfassend ein oder mehrere Sensormodule mit einer ersten Lichtquelle, die eine erste Licht-Linie quer zur Transportrichtung des Förderbandes erzeugt und einer zweiten Lichtquelle, die eine zweite Licht-Linie auf dem Förderband erzeugt, die deckungsgleich mit der ersten Linie ist, sowie mehrere mit einem Abstand nebeneinander liegenden Detektoren (Detektorreihe), die jeweils einen Abschnitt der Licht-Linie beobachtet, wobei die Detektoren von Photodioden gebildet sind. mit einer zur Ansteuerung der Lichtquellen und einer Übergabeeinheit für die Detektor-Signale.

Die DE 195 09 631 A1 betrifft eine Einrichtung zum Erkennen und Sortieren von Getränkebehältern, insbesondere Flaschen und Flaschenkästen, bei welcher mindestens eine elektronische Kamera die zu sortierenden Behälter erfasst und eine strukturierende Beleuchtung, die den optischen Eigenschaften der Behälter angepasst ist, signifikante Teile der Behälterform hervor hebt. Die hervorgehobenen Teile werden bezüglich ihrer Form und Lage von einem angeschlossenen Bildverarbeitungssystem mittels Abtaststrukturen erfasst, die an die optische Erscheinungsform der hervorgehobenen Teile adaptiert sind und mit zuvor in einem elektronischen Speicher abgelegten Referenzwerten aller Behältertypen verglichen werden. Eine mit dem Bildverarbeitungssystem verbundene elektromechanische Sortiereinrichtung in einem Leergutrücknahmeautomaten sortiert die Behälter aus.

Die WO 2013/144509 A1 betrifft eine Vorrichtung zur Messung der Glasdickenverteilung in Containern. Hierfür umfasst die Vorrichtung insbesondere eine Anordnung von mehreren Triangulationssensoren. Jeder Triangulationssensor ist in einem Gehäuse integriert, so dass die einzelnen Triangulationssensoren in beliebigen Orientierungen zueinander positioniert werden können.

Die DE 10 2009 036 389 A1 betrifft ein Verfahren und eine Vorrichtung zur Überprüfung von mit Gefäßen bestückten oder bestückbaren Aufnahmebehältern bezüglich wenigstens einer vorgewählten Eigenschaft, insbesondere bezüglich der vollständigen Bestückung der Aufnahmebehälter mit Gefäßen oder bezüglich der vollständigen Entleerung eines Aufnahmebehälters. Die Aufnahmebehälter werden mit einem Linienlaser beleuchtet und mit einem Bildaufnehmer abgetastet. Die Überprüfung erfolgt in der Weise, dass mittels des Linienlasers Linien auf den Verschlüssen der Gefäße oder auf Oberkanten von Wänden der Aufnahmebehälter erzeugt werden und mittels eines an den Bildaufnehmer an geschlossenen Bildverarbeitungssystems überprüft wird, ob in den Linien zugeordneten Sektoren eines Bildfensters des Bildaufnehmers eine erwartete Anzahl der Linien erscheint.

Die DE 10 2012 021 972 A1 betrifft eine Detektionsvorrichtung zur Detektion eines an und/oder über einem Innenverkleidungsteil eines Kraftfahrzeugs im Bereich einer im Innenverkleidungsteil ausgebildeten Austrittsöffnung befindlichen Gegenstandes, wobei die Detektionsvorrichtung einen Detektionsbereich aufweist, in welchem der Gegenstand in einer Erfassungsrichtung der Detektionsvorrichtung detektierbar ist, wobei die Erfassungsrichtung zumindest im Wesentlichen parallel zu einer Öffnungsebene der Austrittsöffnung verläuft.

Der Erfindung liegt die Aufgabe zugrunde, einen Lichtvorhang der eingangs genannten Art bereitzustellen, der bei geringem konstruktiven Aufwand eine erhöhte Funktionalität aufweist.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Der erfindungsgemäße Lichtvorhang umfasst eine Senderleiste, welche mehrere, jeweils eine Senderachse aufweisende, Lichtstrahlen emittierende Sender und eine Empfängerleiste, umfassend mehrere, jeweils eine Empfängerachse aufweisende, Lichtstrahlen empfangende Empfänger. Die Anzahl der Sender entspricht der Anzahl der Empfänger. Jeder Sender bildet mit diesem zugeordneten Empfänger einen Lichttaster, wobei die Senderachse und die Empfängerachse des Lichttasters in einem Winkel kleiner als 180° aufeinander zuläuft. Für die Senderleiste und die Empfängerleiste ist eine Neigungsverstellung vorhanden. Mittels der Neigungsverstellung wird der Lichtvorhang an die Erfassung von Objekten mit bestimmten Objekthöhen angepasst.

Mit dem erfindungsgemäßen Lichtvorhang kann in einem flächigen oder räumlichen Überwachungsbereich eine sichere Objektdetektion durchgeführt werden. Wesentlich hierbei ist, dass zur Objektdetektion die Senderleiste und Empfängerleiste nicht an gegenüberliegenden Rändern des Überwachungsbereichs angeordnet werden müssen, was die Anwendungsmöglichkeiten des Lichtvorhangs einschränken würde.

Die Objektdetektion erfolgt bei dem erfindungsgemäßen Lichtvorhang nach dem Lichttasterprinzip. Die Sender der Senderleiste und die Empfänger der Empfängerleiste befinden sich auf derselben Seite des Überwachungsbereichs. Der Überwachungsbereich muss dabei keine definierte Begrenzung aufweisen, da die Objektdetektion unabhängig von einer solchen Begrenzung erfolgen kann. Damit kann der erfindungsgemäße Lichtvorhang für ein sehr breites Spektrum von Applikationen eingesetzt werden. Insbesondere kann der Lichtvorhang Objekte auf einer Förderstrecke erfassen. Dabei kann mit dem Lichtvorhang insbesondere auch eine Objektzählung erfolgen. Zur Objektdetektion befinden sich dabei die Senderleiste und Empfängerleiste oberhalb der Förderstrecke, um damit auf der Förderstrecke angeordnete Objekte erfassen zu können.

Dabei sind die Längsachsen der Senderleiste und der Empfängerleiste vorteilhaft senkrecht zur Förderrichtung der Förderstrecke angeordnet, so dass auf der Förderstrecke nebeneinanderliegende Objekte gleichzeitig mit dem Lichtvorhang erfasst werden können.

Derartige Applikationen finden sich insbesondere im Bereich der Förder- und Lagertechnik oder der Verpackungstechnik. Dort werden mit dem Lichtvorhang Objektlagen, Objektgrößen oder auch die Anzahl von Objekten ermittelt.

Eine weitere voreilhafte Verwendung des Lichtvorhangs besteht darin, mit diesem eine Kastenleergutkontrolle durchzuführen. In diesem Fall wird mit dem Lichtvorhang geprüft, ob ein Kasten, insbesondere ein Getränkekasten, vollständig mit Behältern, insbesondere Flaschen oder Dosen, befüllt ist. Auch in diesem Fall werden die Kästen auf einer Förderstrecke transportiert, wobei der Lichtvorhang oberhalb der Förderstrecke angeordnet ist, so dass die Lichtstrahlen der Sender des Lichtvorhangs von oben auf den Kasten geführt sind, um ortsaufgelöst festzustellen, wo im Kasten Belegung mit Behältern vorliegt und wo nicht.

Das Detektionsprinzip des Lichtvorhangs beruht darauf, dass die Senderachse und die Empfängerachse jedes Lichttasters in einem Winkel kleiner als 180° aufeinander zulaufen. Damit sich die Senderachse und die Empfängerachse eines Lichttasters in einem Schnittpunkt schneiden, wird der Detektionsbereich des Lichttasters definiert.

Damit kann der Lichtvorhang an die Erfassung von Objekten mit bestimmten Objektgrößen, insbesondere Objekthöhen, nicht nur dadurch angepasst werden, dass der Abstand des Lichtvorhangs, insbesondere dessen Anbringhöhe oberhalb des Objekts, variiert wird. Vielmehr erfolgt eine derartige Anpassung erfindungsgemäß auch durch eine Neigungsverstellung der Senderleiste und der Empfängerleiste.

Besonders vorteilhaft sind die Neigungswinkel der Senderachse einerseits und die Neigungswinkel der Empfängerachse andererseits zu einer Mittelebene E separat vorgebbar.

Damit können, je nach Art der zu detektierenden Objekte, die Senderachse und die Empfängerachse symmetrisch oder auch unsymmetrisch zur Mittelebene angeordnet werden. Insbesondere bei Objekten mit schrägen oder geometrisch strukturierten Oberflächen können unsymmetrische Anordnungen von Senderachse und Empfängerachse sinnvoll sein.

Zweckmäßig sind die Anordnungen aller Sender in der Senderleiste und aller Empfänger in der Empfängerleiste identisch.

Damit werden mit allen Lichttastern Objekte in exakt gleicher Weise detektiert.

Gemäß einer besonders flexiblen Ausgestaltung der Erfindung sind die Senderleiste und die Empfängerleiste in separaten Gehäusen angeordnet.

Die Gehäuse der Senderleiste und der Empfängerleiste können dann an separaten Halterungen in ihrer Neigung verstellbar angeordnet sein.

Alternativ sind die Senderleiste und die Empfängerleiste in einem gemeinsamen Gehäuse angeordnet.

In diesem Fall sind in dem Gehäuse selbst Mittel zur Neigungsverstellung der Senderleiste und der Empfängerleiste angeordnet.

Gemäß einer vorteilhaften Ausführung der Erfindung ist jedem Sender der Senderleiste eine Schlitzblende oder eine Lochblende zugeordnet.

Damit kann der Strahldurchmesser der Lichtstrahlen an die Größen der zu erfassenden Objekte angepasst werden, so dass mit den Lichttastern des Lichtvorhangs auch mehrere dicht nebeneinanderliegende Objekte einzeln erfasst und voneinander unterschieden werden können.

Mit einer Schlitzblende kann der Strahlquerschnitt der Lichtstrahlen in einer Raumrichtung verändert werden, wogegen mit einer Lochblende der Strahlquerschnitt der Lichtstrahlen in beiden Raumrichtungen verändert werden kann.

Gemäß einer vorteilhaften Ausfiihrungsform der Erfindung weist der Lichtvorhang eine Auswerteeinheit auf, in welcher in Abhängigkeit der Signale der einzelnen Lichttaster wenigstens ein Ausgangssignal generiert wird.

Dabei kann in der Auswerteeinheit für jeden Lichttaster ein separates Ausgangssignal generiert werden.

Alternativ wird in der Auswerteeinheit ein Ausgangssignal für eine Gruppe von Lichttastern erzeugt.

Zweckmäßig handelt es sich bei den Ausgangssignalen um binäre Schaltsignale, deren Schaltzustände angeben, ob ein Objekt im Überwachungsbereich vorhanden ist oder nicht. Diese binären Schaltsignale werden durch Schwellwertbewertungen der Empfangssingale der Empfänger gewonnen.

Besonders zweckmäßig werden bei dem erfindungsgemäßen Lichtvorhang in einem statischen oder dynamischen Einlernvorgang Parameter eingelernt.

In einem statischen Einlernvorgang vor Beginn des Arbeitsbetriebs des Lichtvorhangs können Bauteiltoleranzen bedingte Unterschiede der einzelnen Lichttaster des Lichtvorhangs kompensiert werden. Zweckmäßig sind hierfür in Tabellenform sinnvolle Nachweisschwellen für die einzelnen Lichttaster hinterlegt. Die Kompensation der Unterschiede der einzelnen Lichttaster erfolgt dann bei einer Messung mit allen Lichttastern gegen ein Referenzobjekt mit einer definierten, vorzugsweise diffus reflektierenden Oberfläche. Die bei der Referenzmessung für die einzelnen Lichttaster erhaltenen Messwerte werden dann in Tabellen abgelegt. Abhängig hiervon können die Parameter Sendeleistung, Empfangsverstärkung und/oder Nachweisschwelle für die einzelnen Lichttaster für den nachfolgenden Arbeitsbetrieb eingestellt werden.

Weiterhin kann im statischen Einlernvorgang die Art der Objektdetektion vorgegeben werden. So kann abhängig von den zu detektierenden Objekten vorgegeben werden, ob für jeden Lichttaster ein einzelnes Ausgangssignal generiert wird, oder ob zur Erkennung größerer Objekte einzelne Lichttaster zu Gruppen zusammengefasst werden, wobei dann nur pro Gruppe ein Ausgangssignal generiert wird. Generell ist es möglich, auch einzelne Lichttaster auszublenden, so dass für diese kein Ausgangssignal generiert wird.

In einem dynamischen Einlernvorgang können beispielsweise die Schwellwerte, mit denen die Empfangssignale der Lichttaster bewertet werden, abhängig von den aktuellen Pegeln der Empfangssignale, nachgeführt werden.

Die Erfindung wird im Folgenden anhand der Zeichnungen erläutert. Es zeigen:
- Figur 1:: Schematische Darstellung eines Ausführungsbeispiels des erfindungsgemäßen Lichtvorhangs in einer Längsschnittdarstellung.
- Figur 2:: Querschnittdarstellung der Senderleiste und der Empfängerleiste des Lichtvorhangs gemäß Figur 1.
- Figur 3:: Darstellung des Detektionsbereichs des Lichtvorhangs gemäß Figur 1.
- Figur 4:: Anordnung des Lichtvorhangs an einer Förderstrecke zur Detektion von Flaschen in Getränkekästen.
- Figur 5:: Draufsicht auf einen Getränkekasten gemäß Figur 4.

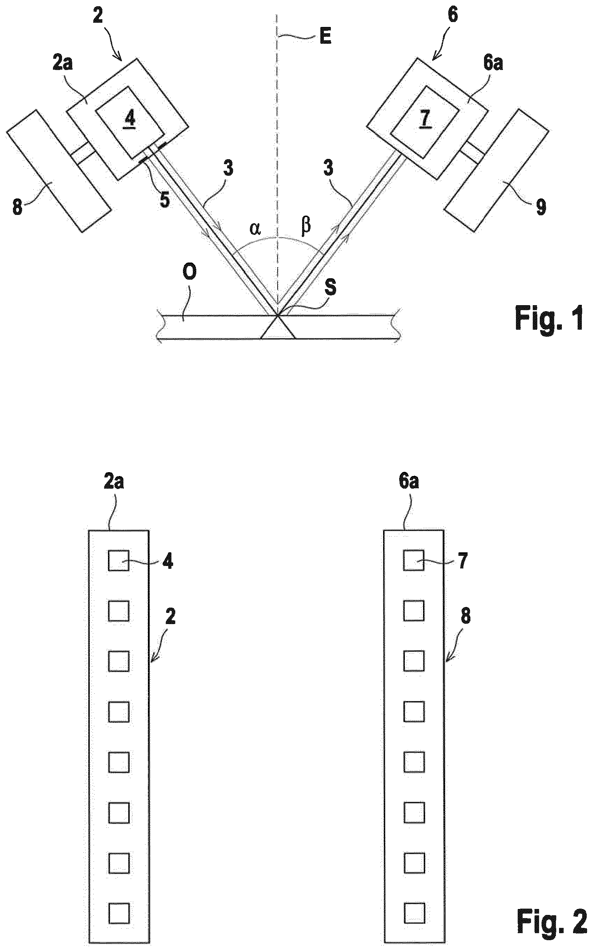

Die Figuren 1 und 2 zeigen ein Ausführungsbeispiel des erfindungsgemäßen Lichtvorhangs 1. Der Lichtvorhang 1 umfasst eine Senderleiste 2 mit einem Gehäuse 2a, in welchem in einer Reihenanordnung eine Anzahl von Lichtstrahlen 3 emittierenden Sendern 4 untergebracht ist. Die Sender 4 sind identisch ausgebildet und bestehen jeweils aus einer Leuchtdiode. Die Sender 4 können fokussierte oder kollimierte Lichtstrahlen 3 emittieren. Um eine lückenlose Abdeckung eines Überwachungsbereichs zu ermöglichen können die Sender auch divergente Lichtstrahlen emittieren. Den Sendern 4 sind nicht gesondert dargestellte Sendeoptiken vorgeordnet. Weiterhin ist jedem Sender 4 eine Schlitzblende 5 nachgeordnet, mittels derer der Strahlquerschnitt an die Größen von zu erfassenden Objekten anpassbar ist. Alternativ kann jedem Sender 4 eine Lochblende nachgeordnet sein. Der Lichtvorhang 1 umfasst weiterhin eine Empfängerleiste 6 mit einem Gehäuse 6a, in welchem in einer Reihenanordnung Lichtstrahlen 3 empfangende Empfänger 7 untergebracht sind. Die Empfänger sind identisch ausgebildet und bestehen jeweils aus einer Photodiode. Den Empfängern 7 sind nicht dargestellte Empfangsoptiken vorgeordnet.

In der Empfängerleiste 6 befindet sich weiterhin eine nicht dargestellte Auswerteeinheit, die von einer Rechnereinheit, wie zum Beispiel einem Mikroprozessor, gebildet ist. In der Auswerteeinheit werden in Abhängigkeit der Empfangssignale Ausgangssignale generiert. Vorzugsweise werden mit der Auswerteeinheit als binäre Schaltsignale ausgebildete Ausgangssignale generiert, die über nicht dargestellte Ausgänge ausgegeben werden. Die binären Schaltsignale werden durch eine Schwellwertbewertung der Empfangssignale gewonnen. Die Schaltzustände der Schaltsignale geben an, ob ein Objekt O vorhanden ist oder nicht. Prinzipiell kann für jeden Lichttaster des Lichtvorhangs 1 ein separates Schaltsignal generiert werden. Generell können auch mehrere Lichttaster zu einer Gruppe zusammengefasst werden, wobei dann nur für diese Gruppe ein Schaltsignal generiert wird.

Die Anzahl der Sender 4 entspricht der Anzahl der Empfänger 7. Jedem Sender 4 ist ein Empfänger 7 zugeordnet. Der Sender 4 und der zugeordnete Empfänger 7 bilden einen Lichttaster.

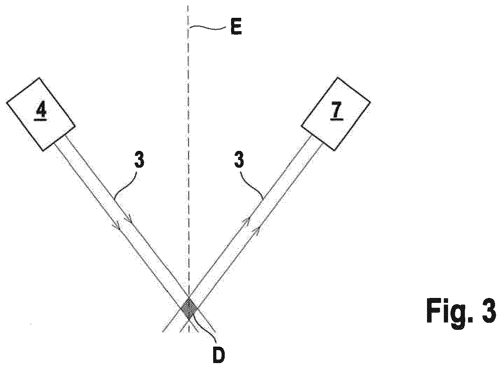

Wie aus Figur 1 ersichtlich, sind die Sender 4 und die Empfänger 7 des Lichtvorhangs 1 geneigt zu einer in vertikaler Richtung verlaufenden Mittelebene E angeordnet, so dass die Senderachse jedes Senders 4 und die Empfängerachse jedes Empfängers 7 in einem Winkel kleiner als 180° aufeinander zulaufen und sich in einem Schnittpunkt S schneiden. Dieser Schnittpunkt S definiert den Detektionsbereich D eines Lichttasters, wie in Figur 3 veranschaulicht ist. Der Detektionsbereich D ist dabei durch den Schnittbereich der vom Sender 4 emittierten Lichtstrahlen 3 und den durch die Empfangsoptik des Empfängers 7 vorgegebenen Sichtbereich B des Empfängers 7 gegeben.

Wie aus Figur 1 ersichtlich, werden die von einem Sender 4 emittierten Lichtstrahlen 3 von einem im Detektionsbereich D befindlichen Objekt O zum Empfänger 7 zurückreflektiert und dort detektiert.

Der Neigungswinkel α der Senderachse zur Mittelebene E und der Neigungswinkel β sind so aufeinander abgestimmt, dass die vom Sender 4 emittierten Lichtstrahlen 3 nach Reflexion an der Objektoberfläche zum Empfänger 7 gelangen. Insbesondere bei Objekten O mit ebenen Objektoberflächen sind die Neigungswinkel gleich groß. Bei gekrümmten, geneigten oder strukturierten Objektoberflächen können die Neigungswinkel α, β geringfügig unterschiedlich sein.

Die Senderleiste 2 und die Empfängerleiste 6 ist jeweils an einer Halterung 8, 9 verstellbar montiert. Dadurch können die Neigungswinkel applikationsabhängig eingestellt werden. Insbesondere ist so, alternativ oder zusätzlich zu einer Höhenverstellung des gesamten Lichtvorhangs 1 auch eine Anpassung an unterschiedliche Objekthöhen möglich.

Der Lichtvorhang gemäß den Figuren 1 und 2 eignet sich insbesondere zur Erfassung von Objekten O auf einer Förderstrecke.

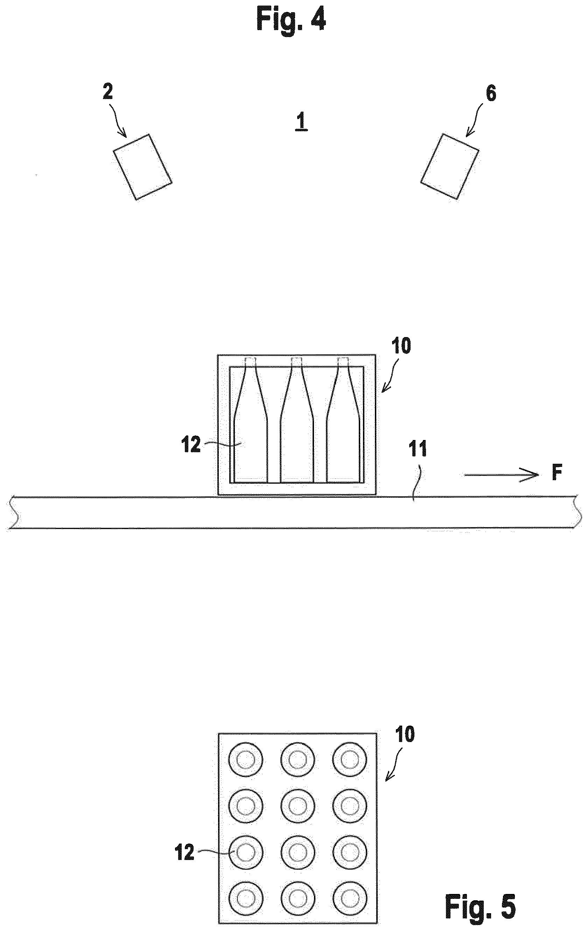

Ein Bespiel hierfür ist, wie in den Figuren 4 und 5 veranschaulicht, eine Leergutkontrolle für Getränkekästen 10, die auf einem Förderband 11 bewegt werden. Der Lichtvorhang 1 ist in Abstand oberhalb des Förderbands 11 angeordnet, so dass die Lichtstrahlen 3 der Sender 4 des Lichtvorhangs 1 von oben auf den jeweiligen Getränkekasten 10 treffen. Dadurch wird erfasst, ob die Einstellfächer der Getränkekästen 10 vollständig mit Flaschen belegt sind oder nicht.

Hierzu werden die Lichttaster so zu Gruppen zusammengefasst, dass quer zur Förderrichtung F des Förderbands 11 in Abstand nebeneinanderliegende Flaschen einzeln mit dem Lichtvorhang erfasst werden.

Im Arbeitsbetrieb des Förderbands 11 werden in relativ kurzen Abständen hintereinander mehrere Getränkekästen 10 auf dem Förderband 11 gefördert. Die Erkennung des Anfangs und Endes eines Getränkekastens 10 erfolgt mit dem Lichtvorhang 1 durch Erfassung der quer zur Förderrichtung F liegenden Ränder des Getränkekastens 10.

### Bezugszeichenliste

- (1): Lichtvorhang
- (2): Senderleiste
- (2a): Gehäuse
- (3): Lichtstrahlen
- (4): Sender
- (5): Schlitzblende
- (6): Empfängerleiste
- (6a): Gehäuse
- (7): Empfänger
- (8, 9): Halterung
- (10): Getränkekasten
- (11): Förderband
- (S): Schnittpunkt
- (D): Detektionsbereich
- (O): Objekt
- (F): Förderrichtung

## Patentansprüche

1. Lichtvorhang (1) mit einer Senderleiste (2) umfassend mehrere, jeweils eine Senderachse aufweisende, Lichtstrahlen (3) emittierende Sender (4) und eine Empfängerleiste (6) umfassend mehrere, jeweils eine Empfängerachse aufweisende, Lichtstrahlen (3) empfangende Empfänger (7),
wobei die Anzahl der Sender (4) der Anzahl der Empfänger (7) entspricht, jeder Sender (4) mit einem diesem zugeordneten Empfänger (7) einen Lichttaster bildet, und die Senderachse und die Empfängerachse des Lichttasters in einem Winkel kleiner als 180° aufeinander zulaufen,
**dadurch gekennzeichnet,**
**dass** für die Senderleiste (2) und die Empfängerleiste (6) eine Neigungsverstellung vorhanden ist, wobei die Neigungsverstellung dazu eingerichtet ist, den Lichtvorhang (1) an die Erfassung von Objekten mit bestimmten Objekthöhen anzupassen.

2. Lichtvorhang (1) nach Anspruch1, **dadurch gekennzeichnet, dass** sich die Senderachse und die Empfängerachse eines Lichttasters in einem Schnittpunkt (S) schneiden, der den Detektionsbereich (D) des Lichttasters definiert.

3. Lichtvorhang (1) nach einem der Ansprüche 1 oder 2, **dadurch gekennzeichnet, dass** die Anordnungen aller Sender (4) in der Senderleiste (2) und aller Empfänger (7) in der Empfängerleiste identisch sind.

4. Lichtvorhang (1) nach einem der Ansprüche 1 bis 3, **dadurch gekennzeichnet, dass** die Neigungswinkel der Senderachsen einerseits und die Neigungswinkel der Empfängerachsen andererseits zu einer Mittelebene E separat vorgebbar sind.

5. Lichtvorhang (1) nach einem der Ansprüche 1 bis 4, **dadurch gekennzeichnet, dass** die Senderleiste (2) und die Empfängerleiste (6) in separaten Gehäusen (2a, 6a) angeordnet sind.

6. Lichtvorhang (1) nach einem der Ansprüche 1 bis 4, **dadurch gekennzeichnet, dass** die Senderleiste (2) und die Empfängerleiste (6) in einem gemeinsamen Gehäuse angeordnet sind.

7. Lichtvorhang (1) nach einem der Ansprüche 1 bis 6, **dadurch gekennzeichnet, dass** jedem Sender (4) der Senderleiste (2) eine Schlitzblende (5) oder eine Lochblende zugeordnet ist.

8. Lichtvorhang (1) nach einem der Ansprüche 1 bis 7, **dadurch gekennzeichnet, dass** dieser eine Auswerteeinheit aufweist, in welcher in Abhängigkeit der Signale der einzelnen Lichttaster wenigstens ein Ausgangssignal generiert wird.

9. Lichtvorhang (1) nach Anspruch 8, **dadurch gekennzeichnet, dass** in der Auswerteeinheit für jeden Lichttaster ein separates Ausgangssignal generiert wird.

10. Lichtvorhang (1) nach Anspruch 8, **dadurch gekennzeichnet, dass** in der Auswerteeinheit ein Ausgangssignal für eine Gruppe von Lichttastern erzeugt wird.

11. Lichtvorhang (1) nach einem der Ansprüche 1 bis 9, **dadurch gekennzeichnet, dass** in einem statischen oder dynamischen Einlernvorgang Parameter eingelernt werden.

12. Verwendung des Lichtvorhangs (1) gemäß einem der Ansprüche 1 bis 11 zur Erfassung von Objekten (O) auf einer Förderstrecke.

13. Verwendung nach Anspruch 12, **dadurch gekennzeichnet, dass** der Lichtvorhang (1) im Bereich der Förder- und Lagertechnik oder der Verpackungstechnik eingesetzt wird.

14. Verwendung des Lichtvorhangs (1) gemäß einem der Ansprüche 1 bis 11 für eine Kontrolle der Belegung eines Kastens mit Behältern.

15. Verwendung des Lichtvorhangs (1) gemäß einem der Ansprüche 1 bis 11 zur Zählung von Objekten (O).

## Claims

1. A light curtain (1) having a transmitter strip (2) comprising a plurality of transmitters (4) emitting light beams (3), each having a transmitter axis, and a receiver strip (6) comprising a plurality of receivers (7) receiving light beams (3), each having a receiver axis, wherein the number of transmitters (4) corresponds to the number of receivers (7), each transmitter (4) forms a light scanner with a receiver (7) associated therewith, and the transmitter axis and the receiver axis of the light scanner converge at an angle of less than 180°,
**characterised in that** an inclination adjustment is provided for the transmitter strip (2) and the receiver strip (6), the inclination adjustment being designed to adapt the light curtain (1) to the detection of objects with specific object heights.

2. A light curtain (1) according to claim 1, **characterised in that** the transmitter axis and the receiver axis of a light scanner intersect at an intersection point (S) which defines the detection range (D) of the light scanner.

3. A light curtain (1) according to one of claims 1 or 2, **characterised in that** the arrangements of all transmitters (4) in the transmitter strip (2) and of all receivers (7) in the receiver strip are identical.

4. A light curtain (1) according to one of claims 1 to 3, **characterised in that** the angles of inclination of the transmitter axes on the one hand and the angles of inclination of the receiver axes on the other hand can be preset separately with respect to a central plane E.

5. A light curtain (1) according to one of claims 1 to 4, **characterised in that** the transmitter strip (2) and the receiver strip (6) are arranged in separate housings (2a, 6a).

6. A light curtain (1) according to one of claims 1 to 4, **characterised in that** the transmitter strip (2) and the receiver strip (6) are arranged in a common housing.

7. A light curtain (1) according to one of claims 1 to 6,
**characterised in that** each transmitter (4) of the transmitter strip (2) is assigned a slotted aperture (5) or a perforated aperture.

8. A light curtain (1) according to one of claims 1 to 7, **characterised in that** it has an evaluation unit in which at least one output signal is generated as a function of the signals of the individual light scanners.

9. A light curtain (1) according to claim 8, **characterised in that** a separate output signal is generated in the evaluation unit for each light sensor.

10. A light curtain (1) according to claim 8, **characterised in that** an output signal for a group of light scanners is generated in the evaluation unit.

11. A light curtain (1) according to one of claims 1 to 9, **characterised in that** parameters are taught in a static or dynamic teach-in process.

12. The use of the light curtain (1) according to one of claims 1 to 11 for detecting objects (O) on a conveyor line.

13. A use according to claim 12, **characterised in that** the light curtain (1) is used in the field of conveying and storage technology or packaging technology.

14. A use of the light curtain (1) according to one of claims 1 to 11 for checking the occupancy of a box with containers.

15. A use of the light curtain (1) according to one of claims 1 to 11 for counting objects (O).

## Revendications

1. Rideau lumineux (1) comportant une bande émettrice (2) comprenant plusieurs émetteurs (4) émettant des faisceaux lumineux (3), ayant chacun un axe émetteur, et une bande réceptrice (6) comprenant plusieurs récepteurs (7) recevant des faisceaux lumineux (3), ayant chacun un axe récepteur, le nombre d'émetteurs (4) correspondant au nombre de récepteurs (7), chaque émetteur (4) formant un scanner lumineux auquel est associé un récepteur (7), et l'axe émetteur et l'axe récepteur du scanner lumineux convergeant selon un angle inférieur à 180°,
**caractérisé en ce qu'**un réglage de l'inclinaison est prévu pour la bande émettrice (2) et la bande réceptrice (6), le réglage de l'inclinaison permettant d'adapter le rideau lumineux (1) à la détection d'objets ayant des hauteurs d'objets spécifiques.

2. Rideau lumineux (1) selon la revendication 1, **caractérisé en ce que** l'axe de l'émetteur et l'axe du récepteur d'un scanner de lumière se croisent en un point d'intersection (S) qui définit la plage de détection (D) du scanner de lumière.

3. Rideau lumineux (1) selon l'une des revendications 1 ou 2, **caractérisé en ce que** les dispositions de tous les émetteurs (4) de la bande émettrice (2) et de tous les récepteurs (7) de la bande réceptrice sont identiques.

4. Rideau lumineux (1) selon l'une des revendications 1 à 3, **caractérisé en ce que** les angles d'inclinaison des axes des émetteurs d'une part et les angles d'inclinaison des axes des récepteurs d'autre part peuvent être préréglés séparément par rapport à un plan central E.

5. Rideau lumineux (1) selon l'une des revendications 1 à 4, **caractérisé en ce que** la bande émettrice (2) et la bande réceptrice (6) sont disposées dans des boîtiers séparés (2a, 6a).

6. Rideau lumineux (1) selon l'une des revendications 1 à 4, **caractérisé en ce que** la bande émettrice (2) et la bande réceptrice (6) sont disposées dans un boîtier commun.

7. Rideau lumineux (1) selon l'une des revendications 1 à 6,
**caractérisé en ce que** chaque émetteur (4) de la bande émettrice (2) est affecté d'une ouverture fendue (5) ou d'une ouverture perforée.

8. Rideau lumineux (1) selon l'une des revendications 1 à 7, **caractérisé en ce qu'**il possède une unité d'évaluation dans laquelle au moins un signal de sortie est généré en fonction des signaux des différents détecteurs de lumière.

9. Rideau lumineux (1) selon la revendication 8, **caractérisé en ce qu'**un signal de sortie distinct est généré dans l'unité d'évaluation pour chaque capteur de lumière.

10. Rideau lumineux (1) selon la revendication 8, **caractérisé en ce qu'**un signal de sortie pour un groupe de détecteurs de lumière est généré dans l'unité d'évaluation.

11. Rideau de lumière (1) selon l'une des revendications 1 à 9, **caractérisé en ce que** les paramètres sont enseignés dans un processus d'apprentissage statique ou dynamique.

12. Utilisation du rideau lumineux (1) selon l'une des revendications 1 à 11 pour détecter des objets (O) sur une ligne de convoyage.

13. Utilisation selon la revendication 12, **caractérisée en ce que** le rideau lumineux (1) est utilisé dans le domaine de la technique de transport et de stockage ou de la technique d'emballage.

14. Utilisation du rideau lumineux (1) selon l'une des revendications 1 à 11 pour vérifier l'occupation d'une boîte contenant des récipients.

15. Utilisation du rideau lumineux (1) selon l'une des revendications 1 à 11 pour compter des objets (O).
